# EUROPÄISCHE PATENTSCHRIFT

(11) **EP 0 508 206 B1**
(45) Veröffentlichungstag und Bekanntmachung des Hinweises auf die Patenterteilung: **01.06.1994**
(21) Anmeldenummer: 92105054.8
(22) Anmeldetag: 24.03.1992
(51) Int. Cl.: B60R 1/12

(54) **Innenspiegel für ein Fahrzeug mit Fernbedienung**
Internal rear-view mirror for a vehicle with remote control
Rétroviseur intérieur pour un véhicule avec commande à distance

(30) Priorität: 09.04.1991 DE 9104319 U
(43) Veröffentlichungstag der Anmeldung: 14.10.1992
(73) Patentinhaber: HOHE KG, D-97903 Collenberg (DE)
(72) Erfinder: Polzer, Herwig, W-8760 Miltenberg (DE); Kaspar, Rudolf, W-6981 Collenberg (DE)
(74) Vertreter: Zinngrebe, Horst, Dr.rer.nat.

(56) Entgegenhaltungen:
- DE-U- 8 520 564

## Beschreibung

Die Erfindung betrifft einen Innenspiegel für ein Fahrzeug mit einem Tragarm, auf welchen ein mit einem Spiegelglas versehenes Spiegelgehäuse verstellbar aufgeklemmt ist, mit einer Abblendeinrichtung für das Spiegelglas, welche eine aus einer Öffnung des Spiegelgehäuses vorstehende Welle aufweist, auf deren freiem außerhalb des Spiegelgehäuses befindlichen Ende ein Drehknopf befestigt ist.

Ein derartiger abblendbarer Innenspiegel ist beispielsweise aus der deutschen Offenlegungsschrift DE-A-3 244 777 bekannt.

Bei Fahrzeugen mit höherem Bedienungskomfort wird beispielsweise das Verriegeln der Türen durch Fernbedienung veranlaßt, die mit Infrarotstrahlung arbeitet. Hierfür ist erforderlich, daß im oder am Fahrzeug ein Infrarotempfänger derart positioniert ist, daß er von der Infrarotstrahlung des entfernten Senders erreicht werden kann.

Man hat Infrarot-Antennen an verschiedenen exponierten Stellen des Fahrzeuges untergebracht, ohne jedoch hinsichtlich des räumlichen Empfangsbereiches eine zufriedenstellende Lösung gefunden zu haben.

Der Erfindung liegt daher die Aufgabe zugrunde, eine günstige Plazierung eines Infrarotempfängers im Inneren eines Kraftfahrzeuges zu schaffen, die eine geringe Wahrscheinlichkeit der Abschattung mit einem großen Empfangswinkelbereich verbindet.

Die Lösung der gestellten Aufgabe gelingt dadurch, bei einem Innenspiegel für ein Fahrzeug, dessen Spiegelglas durch Verdrehen eines außerhalb des Spiegelgehäuses befindlichen Drehknopfes von einer Tagstellung zu einer Nachtstellung und umgekehrt verändert werden kann, den Drehknopf hohl zu gestalten und aus einem infrarotdurchlässigen Werkstoff zu formen und im Inneren des Drehknopfes außerhalb des Spiegelgehäuses das Empfangsfeld wenigstens einer Infrarot-Empfangsdiode vorzusehen. Damit sitzt der Infrarotempfänger unsichtbar und geschützt an exponierter Stelle hinter der Windschutzscheibe des Fahrzeuges, behindert die Sicht des Fahrers durch die Windschutzscheibe nicht und ist dennoch von einem Infrarotsender praktisch von allen Seiten ansteuerbar.

Bevorzugte Ausgestaltungen der Erfindungen sind in den Unteransprüchen angegeben.

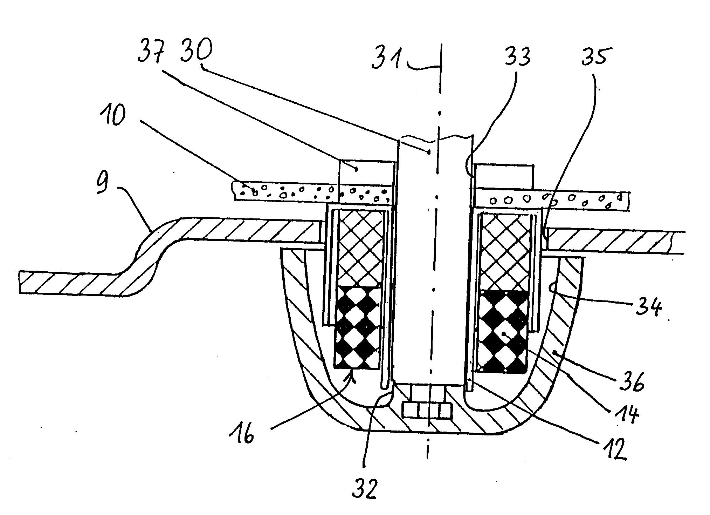

Die Erfindung wird nachstehend anhand des in der beigefügten Zeichnung dargestellten Ausführungsbeispiels im einzelnen beschrieben. Die Figur zeigt einen Querschnitt durch den unteren Teil eines Innenspiegel-Gehäuses sowie durch den zugehörigen Drehknopf.

Die untere Partie 9 des Spiegelgehäuses eines Kfz-Innenspiegels, wie er beispielsweise aus der deutschen Offenlegungsschrift 32 44 777 bekannt ist, besitzt eine runde Durchgangsöffnung 35 von wesentlich größerer lichter Weite als der Außendurchmesser einer sich durch die Öffnung 35 erstreckenden Welle 30 besitzt. Die Welle 30 ist Teil eines Abblendmechanismus für das Spiegelglas des Innenspiegels. Dieser nicht dargestellte Abblendmechanismus kann, wie häufig, mechanischer Art sein, gemäß welcher eine Drehung der Welle 30 um ihre Achse 31 mittels eines auf ihr freies Ende aufgesetzten Drehknopfes 36 zu einem Verkippen eines keilförmigen Spiegelglases führt. Der Abblendmechanismus kann auch elektronischer oder elektrochromatischer Art sein, wobei dann die Welle 30 beispielsweise eine Schalterwelle sein kann und das Drehen der Welle 30 um ihre Achse 31 die elektrischen Bedingungen am Spiegelglas verändert.

Die Stellwelle 30 durchdringt eine Öffnung 33 in einer spiegelgehäusefesten Platte 37 und ist an derselben unbeweglich, jedoch drehbar gelagert. Zwischen Platte 37 und der Partie 9 befindet sich im Inneren des Spiegelgehäuses eine Platine 10, welche eine nicht dargestellte elektronische Schaltung trägt. Auf der Platine 10 sitzt der Boden einer Ringbuchse 12, welche die Stellwelle 30 umgibt und gerade durch die Öffnung 35 nach außen reicht. In der Ringbuchse sind drei um 120° um die Achse 31 versetzte Infrarot-Empfangsdioden befestigt, deren aktive Empfangsfläche (14) für infrarote Strahlung durch die stirnseitige Öffnung der Ringbuchse 12 nach außen freiliegt, wobei auch die äußere Mantelwand der Ringbuchse 12 im Verhältnis zur inneren Buchsenwand zurückversetzt ist. Die Ringbuchse ist auf der Platine 10 befestigt, und die Anschlüsse der drei IR-Empfangsdioden (16) sind mit der nicht dargestellten elektronischen Schaltung verbunden.

Das äußere freie Ende der Welle 30 ist mit einer mittleren Bodenerhebung 32 des becherförmigen Drehknopfes verschraubt, so daß der Drehknopf 36 drehfest auf der Welle 30 sitzt. Der Drehknopf 36, der aus einem für Infrarotstrahlung durchlässigen Material, beispielsweise aus Grilamid TR55 der EMS-Chemie, Köln, besteht, daß sich die Innenkontur 34 ausgehend von der Bodenerhebung 32 in einem sanften Bogen nach außen und oben bis vor die Partie 9 derart erstreckt, daß die Ringbuchse 12 und die von ihr beherbergten Infrarot-Empfangsdioden ganz in dem Inneren des Drehknopfes 36 eingeschlossen sind.

## Patentansprüche

1. Fahrzeuginnenspiegel für ein Fahrzeug mit einem Tragarm, auf welchen ein mit einem Spiegelglas versehenes Spiegelgehäuse verstellbar aufgeklemmt ist, mit einer Abblendeinrichtung für das Spiegelglas, welche eine durch eine Öffnung (33) im Spiegelgehäuse herausgeführte Welle (30) aufweist, die auf ihrem außerhalb des Spiegelgehäuses befindlichen freien Ende einen Drehknopf (36) trägt, dadurch gekennzeichnet, daß der Drehknopf (36) hohl und im wesentlichen becherförmige ist und aus einem für Infrarotstrahlung durchlässigen Material besteht und eine Empfangsfläche (14), die wenigstens einer Infrarot-Empfangsdiode (16) aufweist umschließt.

2. Vorrichtung nach Anspruch 1, dadurch gekennzeichnet, daß das freie Ende der Welle (30) von einer teilweise offenen Buchse (12) umgeben ist, in welcher die Empfangsdiode (16) befestigt ist.

3. Vorrichtung nach Anspruch 1 oder 2, dadurch gekennzeichnet, daß innerhalb des Drehknopfes (36) um die Welle (30) herum drei Infrarot-Empfangsdioden angeordnet sind, von denen jede einen winkelmäßigen Empfangsbereich von etwa 120° aufweist.

4. Vorrichtung nach einem der vorstehenden Ansprüche, dadurch gekennzeichnet, daß der Drehknopf (36) aus Grilamid TR55 besteht.

## Claims

1. An interior mirror for a vehicle, having a supporting arm to which a mirror housing provided with mirror glass is adjustably attached, and having an anti-dazzle device for the mirror glass, the said anti-dazzle device having a spindle (30) which is guided out through an opening (33) in the mirror housing and which carries a rotary knob (36) on its free end outside the mirror housing, characterised in that the rotary knob (36) is hollow and substantially cup-shaped, is made of a material permeable to infra-red radiation and surrounds a receiving surface (14) which has at least one infra-red receiving diode (16).

2. Apparatus according to claim 1, characterised in that the free end of the spindle (30) is surrounded by a partially open sleeve (12) in which the receiving diode (16) is fixed.

3. Apparatus according to claim 1 or 2, characterised in that three infra-red receiving diodes are arranged round the spindle (30) inside the rotary knob (36), each of the said receiving diodes having an angular reception range of approximately 120°.

4. Apparatus according to any one of the preceding claims, characterised in that the rotary knob (36) is made of Grilamid TR55.

## Revendications

1. Rétroviseur intérieur pour un véhicule avec un bras porteur, sur lequel un corps de rétroviseur muni d'un miroir est serré de manière réglable, avec un dispositif de tamisage pour le miroir, qui présente un arbre (30) sorti à travers une ouverture (33) dans le corps de rétroviseur, qui porte sur son extrémité libre se trouvant à l'extérieur du corps de rétroviseur un bouton tournant (36), caractérisé en ce que le bouton tournant (36) est creux et pour l'essentiel en forme de coupe et est constitué d'un matériau transparent au rayonnement infrarouge et entoure une surface de réception (14) qui comprend au moins une diode de réception à infrarouge (16).

2. Dispositif selon la revendication 1, caractérisé en ce que l'extrémité libre de l'arbre (30) est entourée d'une douille (12) partiellement ouverte dans laquelle est fixée la diode de réception (16).

3. Dispositif selon la revendication 1 ou 2, caractérisé en ce qu'à l'intérieur du bouton tournant (36) sont disposées tout autour de l'arbre (30) trois diodes de réception à infrarouge, chacune desquelles présentant une zone de réception angulaire de 120° environ.

4. Dispositif selon l'une des revendications précédentes, caractérisé en ce que le bouton tournant (36) est constitué de Grilamid TR55.
